(19) Europäisches Patentamt
European Patent Office
Office européen des brevets

(11) **EP 4 615 076 A1**

(12) **EUROPEAN PATENT APPLICATION**
published in accordance with Art. 153(4) EPC

(43) Date of publication:
**10.09.2025 Bulletin 2025/37**

(21) Application number: **23886408.6**

(22) Date of filing: **06.11.2023**

(51) International Patent Classification (IPC):
*H04W 56/00* (2009.01)    *H04W 72/23* (2023.01)

(52) Cooperative Patent Classification (CPC):
**H04W 56/00; H04W 72/23**

(86) International application number:
**PCT/KR2023/017659**

(87) International publication number:
**WO 2024/096714 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 KR 20220146405**

(71) Applicant: **LG Electronics Inc.**
**Yeongdeungpo-gu**
**Seoul 07336 (KR)**

(72) Inventors:
• **GO, Seongwon**
**Seoul 06772 (KR)**
• **KANG, Jiwon**
**Seoul 06772 (KR)**
• **PARK, Haewook**
**Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR UPLINK TRANSMISSION AND RECEPTION IN WIRELESS COMMUNICATION SYSTEM**

(57)    A method performed by a terminal in a wireless communication system, according to an embodiment of the present disclosure, comprises the steps of: receiving first configuration information; receiving second configuration information; determining a first uplink timing and a second uplink timing; transmitting a first uplink channel/signal on the basis of the first uplink timing; and transmitting a second uplink channel/signal on the basis of the second uplink timing.

【FIG. 3】

```
                    ┌─────────┐
                    │  Start  │
                    └────┬────┘
                         │
   ┌─────────────────────────────────────────────┐
   │      Receive first configuration information │──── S310
   └─────────────────────┬───────────────────────┘
                         │
   ┌─────────────────────────────────────────────┐
   │     Receive second configuration information │──── S320
   └─────────────────────┬───────────────────────┘
                         │
   ┌─────────────────────────────────────────────┐
   │ Determine first uplink timing and second     │──── S330
   │ uplink timing                                │
   └─────────────────────┬───────────────────────┘
                         │
   ┌─────────────────────────────────────────────┐
   │       Transmit first uplink channel/signal   │──── S340
   └─────────────────────┬───────────────────────┘
                         │
   ┌─────────────────────────────────────────────┐
   │      Transmit second uplink channel/signal   │──── S350
   └─────────────────────┬───────────────────────┘
                         │
                    ┌─────────┐
                    │   End   │
                    └─────────┘
```

EP 4 615 076 A1

**Description**

[TECHNICAL FIELD]

The present disclosure relates to a method and an apparatus for uplink transmission and reception in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies,, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CCBWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed. In order to support a TRP-specific TA (i.e., to support two TAs for two TRPs), two TAGs can be configured within one serving cell.

A downlink timing is utilized to determine an uplink timing (e.g. uplink frame) for the TAG. For two TAs, it is discussed that two (TRP specific) downlink timings are supported. A method is required to measure/configure/define the two downlink timings described above.

[DISCLOSURE]

[TECHNICAL PROBLEM]

An object of the present disclosure is to propose an uplink transmission and reception method based on uplink timings for two TAGs.

According to an existing method, a downlink timing for determining an uplink timing is defined based on either a special cell (SpCell) or activated SCells depending on the type of TAG (PTAG or STAG). However, when two TAGs are configured in one serving cell, it may be ambiguous how the two downlink timings are defined/configured.

There may be some ambiguity as to how the two downlink timings are defined/configured with respect to an existing reference cell definition. As an example, if the definition of the existing reference cell is maintained as it is, it may be ambiguous whether the two downlink timings may be distinguished/determined solely by the reference cell or whether the two downlink timings are distinguished/determined based on additional definitions/configurations. As an example, when two downlink timings are defined based on the reference cell, it may be ambiguous whether they are distinguished/determined based on the same reference cell or distinguished/determined based on different reference cells.

Another object of the present disclosure is to configure/define clear criteria for determining the two downlink timings described above.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in a wireless communication system according to an embodiment of the present disclosure comprises receiving first configuration information, receiving second configuration information, determining a first uplink timing and a second uplink timing, transmitting a first uplink channel/signal based on the first uplink timing, and transmitting a second uplink channel/signal based on the second uplink timing.

i) first control resource sets (CORESETs) related to a first control resource set (CORESET) pool index and ii) second CORESETs related to a second CORESET pool index are configured based on the first configuration information.

First $N_{TA,offset}$ and second $N_{TA,offset}$ related to a serving cell are configured based on the second configuration information. The first $N_{TA,offset}$ and second $N_{TA,offset}$ are related to a first timing advance group (TAG) and a second timing advance group (TAG).

The first uplink timing is determined based on the first $N_{TA,offset}$ and a first downlink timing, and the second uplink timing is determined based on the second $N_{TA,offset}$ and a second downlink timing.

The first $N_{TA,offset}$ may be applied to uplink transmission based on a first transmission configuration indication (TCI) state related to the first CORESET pool index.

The second $N_{TA,offset}$ may be applied to uplink transmission based on a second TCI state related to the second CORESET pool index.

The first TAG may have an association with the first TCI state, and the second TAG may have an association with the second TCI state.

The first downlink timing may be based on a reception time based on a first downlink reference signal (DL RS) related to the first TCI state. The second downlink timing may be based on a reception time based on a second downlink reference signal (DL RS) related to the second TCI state.

The reception time based on each DL RS may be based on a time when a first path of a downlink frame related to each DL RS is received by the UE.

The time when the first path of the downlink frame may be received by the UE is based on a start of the downlink frame.

The first DL RS and the second DL RS may be related to at least one reference cell.

Based on the first TAG and the second TAG being a first primary TAG (PTAG) and a second PTAG: the at least one reference cell may include i) a special cell (SpCell) and/or ii) a serving cell with a lowest ID among serving cells in which the first CORESETs and the second CORESETs are configured.

Based on the first TAG and the second TAG being a first secondary TAG (STAG) and a second STAG: the at least one reference cell may include i) one of activated secondary cells (SCells) and/or ii) a serving cell with a lowest ID among the serving cells in which the first CORESETs and the second CORESETs are configured.

The first DL RS and the second DL RS may be received based on different slot indices.

Each uplink timing may be related to an uplink frame.

Each uplink channel/signal may be a physical uplink shared channel (PUSCH), a sounding reference signal (SRS), or a physical uplink control channel (PUCCH).

Each uplink timing may take place a time unit before each downlink timing. The time unit may be determined based on i) $N_{TA}$ related to an amount of time alignment for each TAG, ii) each $N_{TA,offset}$, and iii) a basic time unit $T_c$.

The method may further comprise receiving a medium access control-control element (MAC CE). The MAC CE may include a timing advance command. The timing advance command may indicate an index value $T_A$.

Based on the timing advance command being related to the first TAG or the second TAG: $N_{TA}$ related to an amount of time alignment for the first TAG or the second TAG may be determined based on the index value $T_A$.

A user equipment (UE) operating in a wireless communication system according to another embodiment of the present disclosure, the UE comprises one or more transceivers, one or more processors, and one or more memories connected to the one or more processors and storing instructions.

Based on the instructions being executed by the one or more processors, the one or more processors are configured to perform all steps of any one of methods performed by the user equipment.

A device according to another embodiment of the present disclosure comprises one or more memories and one or more processors functionally connected to the one or more memories.

Based on the one or more memories being executed by the one or more processors, the one or more processors store instructions configured to perform all steps of any one of methods performed by a user equipment.

One or more non-transitory computer-readable media according to another embodiment of the present disclosure stores instructions. The instructions executable by one or more processors configure the one or more processor to perform all steps of any one of methods performed by a user equipment.

A method performed by a base station in a wireless communication system according to another embodiment of the present disclosure comprises transmitting first configuration information, transmitting second configuration information, receiving a first uplink channel/signal based on a first uplink timing, and receiving a second uplink channel/signal based on a second uplink timing.

i) first control resource sets (CORESETs) related to a first control resource set (CORESET) pool index and ii) second CORESETs related to a second CORESET pool index are configured based on the first configuration information.

First $N_{TA,offset}$ and second $N_{TA,offset}$ related to a serving cell are configured based on the second configuration information. The first $N_{TA,offset}$ and second $N_{TA,offset}$ are related to a first timing advance group (TAG) and a second timing advance group (TAG).

The first uplink timing is determined based on the first $N_{TA,offset}$ and a first downlink timing, and the second uplink timing is determined based on the second $N_{TA,offset}$ and a second downlink timing.

A base station operating in a wireless communication system according to another embodiment of the present disclosure comprises one or more transceivers, one or more processors, and one or more memories connected to the one or more processors and storing instructions.

Based on the instructions being executed by the one or more processors, the one or more processors are configured to perform all steps of any one of methods performed by a base station.

[ADVANTAGEOUS EFFECTS]

According to an embodiment of the present disclosure, first/second uplink timings for two TAGs are determined based on first/second $N_{TA,offse}$ and first/second downlink timings. Therefore, the reliability of M-DCI-based M-TRP uplink transmission and reception operations can be improved.

According to an embodiment of the present disclosure, clear criteria for determining the first/second downlink timing are defined/configured (e.g., first/second TCI states related first/second CORESET pool index, first/second slot indexes, and/or at least one reference cell, etc.). Based on the criteria, a TRP specific uplink timing is determined through each downlink timing determined/measured. Therefore, the accuracy of the TRP-specific uplink timing can be improved.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates MAC RAR according to an embodiment of the present disclosure.
FIG. 2 illustrates a timing advance command MAC CE according to an embodiment of the present disclosure.
FIG. 3 is a flowchart illustrating a method performed by a UE in a wireless communication system according to an embodiment of the present disclosure.
FIG. 4 is a flowchart illustrating a method performed by a base station in a wireless communication system according to another embodiment of the present disclosure.
FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. At this time, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used by resource 1 and the UL TCI state used by resource 2 are indicated. The UL MTRP URLLC may be applied to the PUSCH/PUCCH.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

<Meaning of TCI state/ beam indication>

In addition, in the methods proposed in the present disclosure below, the meaning of using (/mapping) a specific TCI state (or TCI) when receiving data/DCI/UCI for a certain frequency/time/space resource is as follows.

For DL, using (mapping) the specific TCI state (or TCI) when receiving data/DCI/UCI for the certain frequency/time/spatial resource may mean estimating a channel from DMRS using the QCL type and QCL RS indicated by the DL TCI state in the frequency/time/space resources, and receiving/demodulating data/DCI with the estimated channel.

For UL, using (mapping) the specific TCI state (or TCI) when receiving data/DCI/UCI for the certain frequency/time/spatial resource may mean transmitting/modulating the DMRS and data/UCI by using a Tx beam and/or Tx power indicated by the UL TCI state.

The UL TCI state may contain Tx beam or Tx power information of the UE, and spatial relation info may be configured to the UE through other parameters instead of the TCI state. The UL TCI state may be directly indicated to UL grant DCI, or may mean spatial relation info of the SRS resource indicated through the SRI field of the UL grant DCI.

Alternatively, the UL TCI state may mean OL Tx power control parameters (j: index for open loop parameters Po & alpha (maximum 32 parameter value sets per cell), q_d: index of DL RS resource for PL measurement (maximum 4 measurements per cell), and l: closed loop power control process index (maximum 2 processes per cell)) connected to a value indicated through the SRI field of the UL grant DCI. Alternatively, in R17 NR, UL TCI may be indicated using DL grant DCI.

<Extended description of TRP classification>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP1. For example, transmitting, by the UE, the data/DCI using the first TCI state related to the first CORESET pool index means that the data/DCI is transmitted to TRP1.

For example, receiving, by the UE, the data/DCI using the second TCI state related to the second CORESET pool index means that the data/DCI is received from TRP2. For example, transmitting, by the UE, the data/DCI using the second TCI state related to the second CORESET pool index means that the data/DCI is transmitted to TRP2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be based on Table 1 below.

[Table 1]

| |
|---|
| Uplink frame number i for transmission from the UE shall start $T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$ before the start of the corresponding downlink frame at the UE where<br><br> - $N_{\mathrm{TA}}$ and $N_{\mathrm{TA,offset}}$ are given by clause 4.2 of [5, TS 38.213], except for msgA transmission on PUSCH where $N_{\mathrm{TA}} = 0$ shall be used;<br> - $N_{\mathrm{TA,adj}}^{\mathrm{common}}$ given by clause 4.2 of [5, TS 38.213] is derived from the higher-layer parameters *TACommon, TACommonDrift,* and *TACommonDriftVariation* if configured, otherwise $N_{\mathrm{TA,adj}}^{\mathrm{common}} = 0$ ;<br> - $N_{\mathrm{TA,adj}}^{\mathrm{UE}}$ given by clause 4.2 of [5, TS 38.213] is computed by the UE based on UE position and serving-satellite-ephemeris-related higher-layers parameters if configured, otherwise $N_{\mathrm{TA,adj}}^{\mathrm{UE}} = 0$ . |

In Table 1, $T_{TA}$ may be calculated/determined based on $N_{TA}$ and $N_{TA,offset}$. $N_{TA}$ and $N_{TA,offset}$ may be configured/applied as follows.

$N_{TA}$: 1) configuring through a random access response (RAR) and 2) configuring through timing advance command (MAC-CE)

$N_{TA,offset}$: 1) configuring a specific value per serving cell and 2) applying a pre-defined value based on duplex mode/FR suitably to the serving cell

A method of configuring/applying $N_{TA,offset}$ and $N_{TA}$ described above is described in detail below.

$N_{TA,offset}$
Case 1) Method of configuring a specific value per serving cell

For example, a UE may receive configuration information (e.g., ServingCellCommon Information) including information on $N_{TA,offset}$ from a base station. The configuration information may be received based on RRC signaling. Table 2 below shows the configuration information.

【Table 2】

| | |
|---|---|
| – | *ServingCellConfigCommon* |

The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync.

**_ServingCellConfigCommon_ information element**

-- ASN1START

-- TAG-SERVINGCELLCONFIGCOMMON-START

```
ServingCellConfigCommon ::=          SEQUENCE {
    physCellId                                                PhysCellId
OPTIONAL,     -- Cond HOAndServCellAdd,
    downlinkConfigCommon                              DownlinkConfigCommon
OPTIONAL,     -- Cond HOAndServCellAdd
    uplinkConfigCommon                                 UplinkConfigCommon
OPTIONAL,     -- Need M
    supplementaryUplinkConfig                          UplinkConfigCommon
OPTIONAL,     -- Need S
    n-TimingAdvanceOffset                 ENUMERATED  {  n0,  n25600,  n39936  }
OPTIONAL,     -- Need S

                                        (...)

}
```

-- TAG-SERVINGCELLCONFIGCOMMON-STOP

-- ASN1STOP

**_n-TimingAdvanceOffset_**

The N_TA-Offset to be applied for all uplink transmissions on this serving cell. If the field is absent, the UE applies the value defined for the duplex mode and frequency range of this serving cell. See TS 38.133 [14], table 7.1.2-2.

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 3 below shows the value of $N_{TA,offset}$.

【Table 3】

| Table 7.1.2-2: The Value of $N_{\text{TA offset}}$ | |
|---|---|
| **Frequency range and band of cell used for uplink transmission** | $N_{\text{TA offset}}$ **(Unit: $T_C$)** |
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |
| [1] Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell. <br> [2] Note 2: Void | |

Case 1) Method of configuring through a random access response (RAR)

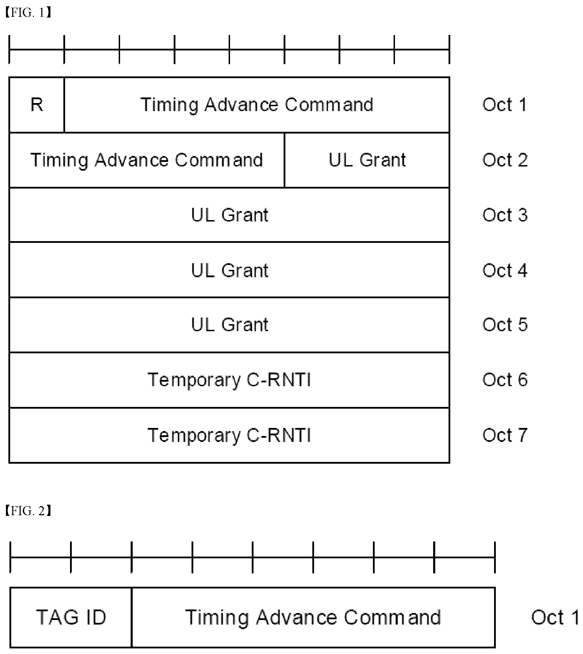

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value (see Table 5 below). The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. Table 4 below shows MAC payload of the MAC RAR.

[Table 4]

6.2.3 MAC payload for Random Access Response
The MAC RAR is of fixed size as depicted in Figure 6.2.3-1, and consists of the following fields:
- R: Reserved bit, set to 0;
- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;
- Timing Advance Command: The Timing Advance Command field indicates the index value $T_A$ used to control the amount of timing adjustment that the MAC entity has to apply in TS 38.213 [6]. The size of the Timing Advance Command field is 12 bits;
- UL Grant: The Uplink Grant field indicates the resources to be used on the uplink in TS 38.213 [6]. The size of the UL Grant field is 27 bits;
- Temporary C-RNTI: The Temporary C-RNTI field indicates the temporary identity that is used by the MAC entity during Random Access. The size of the Temporary C-RNTI field is 16 bits.
The MAC RAR is octet aligned.

Table 5 below shows transmission timing adjustments based on the timing advance command.

[Table 5]

4.2 Transmission timing adjustments

(continued)

A UE can be provided a value $N_{TA,offset}$ of a timing advance offset for a serving cell by *n-TimingAdvanceOffset* for the serving cell. If for a serving cell the UE is provided two *coresetPoolIndex values 0 and 1 for first and second CORESETs, or is not provided coresetPoolIndex value for first CORESETs and is provided coresetPoolIndex value of 1 for second CORESETs, the UE can be provided first and second $N_{TA,offset}$ values by n-TimingAdvanceOffset* and *n-TimingAdvanceOffset2* for transmissions with TCI states associated with the first and second CORESETs, respectively. A UE can be *provided a second $N_{TA,offset}$* value for transmissions with spatial domain filters corresponding to TCI states associated with *physCellId* different from *physCellId* for the serving cell in addition to a first $N_{TA,offset}$ value for transmissions with spatial domain filters corresponding to TCI states associated with *physCellId* for the serving cell. The *first and second $N_{TA,offset}$* values correspond to first and second TAGs [11, TS 38.321] having an association indicated by *tag-Id-ptr* with first and second joint TCI states provided by *dl-OrJointTCI-StateList* or first and second UL TCI states provided by *ul-TCI-State-List*. If the UE is not provided *n-TimingAdvanceOffset* for a serving cell, the UE determines a default value $N_{TA,offset}$ of the timing advance offset for the serving cell as described in [10, TS 38.133].

If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.

For a band with synchronous contiguous intra-band EN-DC in a band combination with non-applicable maximum transmit timing difference requirements as described in Note 1 of Table 7.5.3-1 of [10, TS 38.133], if the UE indicates *ul-TimingAlignmentEUTRA-NR* as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell in MCG in the band. The UE is not expected to transmit a PUSCH/SRS/PUCCH in one CG when the PUSCH/SRS/PUCCH is overlapping in time, even partially, with random access preamble transmitted in another CG. For a SCS of $2^\mu \cdot 15$ kHz, the timing advance command for a TAG indicates the change of the uplink timing relative to the current uplink timing for the TAG in multiples of $16 \cdot 64 \cdot T_c/2^\mu$. The start timing of the random access preamble is described in [4, TS 38.211].

A timing advance command [11, TS 38.321] in case of random access response or in an absolute timing advance command MAC CE or in a cell switch command, $T_A$, for a TAG indicates $N_{TA}$ values by index values of $T_A = 0, 1, 2, ..., 3846$, where an amount of the time alignment for the TAG with SCS of $2^\mu \cdot 15$ kHz is $N_{TA} = T_A \cdot 16 \cdot 64/2^\mu$. $N_{TA}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A = 0, 1, 2,..., 63$, where for a SCS of $2^\mu \cdot 15$ kHz, $N_{TA\_new} = N_{TA\_old} + (T_A - 31) \cdot 16 \cdot 64/2^\mu$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA\_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

(continued)

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot $n + k + 1 + 2^{\mu} \cdot K_{\text{offset}}$ where $k = \left\lceil N_{\text{slot}}^{\text{subframe},\mu} \cdot \right.$

$\left. (N_{\text{T},1} + N_{\text{T},2} + N_{\text{TA,max}} + 0.5)/T_{\text{sf}} \right\rceil$, $N_{\text{T},1}$ is a time duration in msec of $N_1$ symbols corresponding to a PDSCH processing time for UE processing capability 1 when additional PDSCH DM-RS is configured, $N_{\text{T},2}$ is a time duration in msec of $N_2$ symbols corresponding to a PUSCH preparation time for UE processing capability 1 [6, TS 38.214], $N_{\text{TA,max}}$ is the maximum timing advance value in msec that can be provided by a TA command field of 12 bits, $N_{\text{slot}}^{\text{subframe},\mu}$ is the number of slots per subframe, $T_{\text{sf}}$ is the subframe duration of 1 msec, and $K_{\text{offset}} = K_{\text{cell,offset}} - K_{\text{UE,offset}}$, where $K_{\text{cell,offset}}$ is provided by cellSpecificKoffset and $K_{\text{UE,offset}}$ is provided by a Differential Koffset MAC CE command [11, TS 38.321]; otherwise, if not respectively provided, $K_{\text{cell,offset}} = 0$ or $K_{\text{UE,offset}} = 0$. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$ [6, TS 38.214]. Slot n and $N_{\text{slot}}^{\text{subframe},\mu}$ are determined with respect to the minimum SCS among the SCSs of all configured UL BWPs for all uplink carriers in the TAG. $N_{\text{TA,max}}$ is determined with respect to the minimum SCS among the SCSs of all configured UL BWPs for all uplink carriers in the TAG and for all configured initial UL BWPs provided by initialUplinkBWP. The uplink slot n is the last slot among uplink slot(s) overlapping with the slot(s) of PDSCH reception assuming $T_{TA} = 0$, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

If the received downlink timing changes and is not compensated or is only partly compensated by the uplink timing adjustment without timing advance command as described in [10, TS 38.133], the UE changes $N_{\text{TA}}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates larger-thanCP-capability. If a UE indicates XYZ_capability, is provided SRS-autonomousTAupdate [10, TS 38.133], and transmits SRS based on a configuration by SRS-PosResourceSet in SRS-PosRRC-InactiveConfig-ValidityArea in RRC_INACTIVE state, the UE may autonomously update $N_{\text{TA}}$ at cell reselection; else, if the UE is not provided SRS-autonomousTAupdate, the UE maintains the $N_{\text{TA}}$ of a last serving cell prior to the release of a dedicated RRC connection [11, TS 38.321]. For operation with single TAG on a serving cell, if two adjacent slots overlap due to a TA command, the latter slot is reduced in duration relative to the former slot. The UE does not change $N_{\text{TA}}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid overlapping with a former transmission using a second TAG.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted (see Table 5). The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. Table 6 below shows payload of the timing advance command MAC CE.

[Table 6]

6.1.3.4 Timing Advance Command MAC CE

The Timing Advance Command MAC CE is identified by MAC subheader with LCID as specified in Table 6.2.1-1.

It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;

- Timing Advance Command: This field indicates the index value $T_A$ (0, 1, 2... 63) used to control the amount of timing adjustment that MAC entity has to apply (as specified in TS 38.213 [6]). The length of the field is 6 bits.

6.1.3.4a Absolute Timing Advance Command MAC CE

The Absolute Timing Advance Command MAC CE is identified by MAC subheader with eLCID as specified in Table 6.2.1-1b.

It has a fixed size and consists of two octets defined as follows (Figure 6.1.3.4a-1):

- Timing Advance Command: This field indicates the index value TA used to control the amount of timing adjustment that the MAC entity has to apply in TS 38.213 [6]. The size of the field is 12 bits;

- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;

- R: Reserved bit, set to 0.

Timing Advance Group (TAG)

A timing advance group (TAG) refers to a group of serving cells that use the same timing advance value. Table 7 below shows definition of the TAG and configuration information related to the TAG.

【Table 7】

| |
|---|
| **Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs. |

*TAG-Config*

The IE *TAG-Config* is used to configure parameters for a time-alignment group.

***TAG-Config* information element**

```
-- ASN1START
-- TAG-TAG-CONFIG-START

TAG-Config ::=                    SEQUENCE {
      tag-ToReleaseList                      SEQUENCE (SIZE (1..maxNrofTAGs)) OF TAG-Id
OPTIONAL,     -- Need N
      tag-ToAddModList                       SEQUENCE (SIZE (1..maxNrofTAGs)) OF TAG
OPTIONAL      -- Need N
}

TAG ::=                     SEQUENCE {
      tag-Id                     TAG-Id,
      timeAlignmentTimer                 TimeAlignmentTimer,
      ...
}

TAG-Id ::=                   INTEGER (0..maxNrofTAGs-1)
```

| |
|---|
| ***tag-Id*** |
| Indicates the TAG of the SpCell or an SCell, see TS 38.321 [3]. Uniquely identifies the TAG within the scope of a Cell Group (i.e. MCG or SCG). |
| ***timeAlignmentTimer*** |
| The timeAlignmentTimer for TAG with ID tag-Id, as specified in TS 38.321 [3]. |

| maxNrofTAGs | INTEGER ::= 4 -- Maximum number of Timing Advance Groups |
|---|---|

– **CellGroupConfig**

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

**CellGroupConfig information element**

```
-- ASN1START
-- TAG-CELLGROUPCONFIG-START
-- Configuration of one Cell-Group:
CellGroupConfig ::=                    SEQUENCE {
```

```
cellGroupId                    CellGroupId,
    rlc-BearerToAddModList                    SEQUENCE (SIZE(1..maxLC-ID)) OF RLC-
BearerConfig                    OPTIONAL,    -- Need N
    rlc-BearerToReleaseList                    SEQUENCE (SIZE(1..maxLC-ID)) OF
LogicalChannelIdentity                    OPTIONAL,    -- Need N
    mac-CellGroupConfig                                        MAC-CellGroupConfig
OPTIONAL,    -- Need M
    physicalCellGroupConfig                                        PhysicalCellGroupConfig
OPTIONAL,    -- Need M
    spCellConfig                                        SpCellConfig
OPTIONAL,    -- Need M
    sCellToAddModList                    SEQUENCE (SIZE (1..maxNrofSCells)) OF
SCellConfig                    OPTIONAL,    -- Need N
    sCellToReleaseList                    SEQUENCE (SIZE (1..maxNrofSCells)) OF
SCellIndex                    OPTIONAL,    -- Need N
                                        (...)
```

**MAC-CellGroupConfig**

The IE MAC-CellGroupConfig is used to configure MAC parameters for a cell group, including DRX.

**MAC-CellGroupConfig information element**

```
-- ASN1START
-- TAG-MAC-CELLGROUPCONFIG-START

MAC-CellGroupConfig ::=              SEQUENCE {
    drx-Config                                        SetupRelease { DRX-Config }
OPTIONAL,    -- Need M
    schedulingRequestConfig                                        SchedulingRequestConfig
OPTIONAL,    -- Need M
    bsr-Config                                        BSR-Config
OPTIONAL,    -- Need M
    tag-Config                                        TAG-Config
OPTIONAL,    -- Need M
    phr-Config                                        SetupRelease { PHR-Config }
OPTIONAL,    -- Need M
    skipUplinkTxDynamic                    BOOLEAN,
```

---

(…)

**CellGroupId**

The IE CellGroupId is used to identify a cell group. Value 0 identifies the master cell group. Other values identify secondary cell groups. In this version of the specification only values 0 and 1 are supported.

***CellGroupId information element***

-- ASN1START

---

-- TAG-CELLGROUPID-START

CellGroupId ::=                              INTEGER (0.. maxSecondaryCellGroups)

-- TAG-CELLGROUPID-STOP

-- ASN1STOP

maxSecondaryCellGroups INTEGER ::= 3

---

Procedure

Uplink time alignment may be performed based on Table 8 below.

[Table 8]

---

5.2 Maintenance of Uplink Time Alignment

RRC configures the following parameters for the maintenance of UL time alignment:

- *timeAlignmentTimer* (per TAG) which controls how long the MAC entity considers the Serving Cells belonging to the associated TAG to be uplink time aligned;

- *inactivePosSRS-TimeAlignmentTimer* which controls how long the MAC entity considers the Positioning SRS transmission in RRC_INACTIVE in clause 5.26 to be uplink time aligned;

- *cg-SDT-TimeAlignmentTimer* which controls how long the MAC entity considers the uplink transmission for CG-SDT to be uplink time aligned.

The MAC entity shall:

1> when a Timing Advance Command MAC CE is received, and if an $N_{TA}$ (as defined in TS 38.211 [8]) has been maintained with the indicated TAG:

2> apply the Timing Advance Command for the indicated TAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure triggered as in clause 5.27 is ongoing:

3> start or restart the *cg-SDT-TimeAlignmentTimer* associated with the indicated TAG.

2> else:

3> start or restart the *timeAlignmentTimer* associated with the indicated TAG.

1> when a Timing Advance Command is received in a Random Access Response message for a Serving Cell belonging to a TAG or in a MSGB for an SpCell:

2> if the Random Access Preamble was not selected by the MAC entity among the contention-based Random Access Preamble:

3> apply the Timing Advance Command for this TAG;

3> start or restart the *timeAlignmentTimer* associated with this TAG.

2> else if the *timeAlignmentTimer* associated with this TAG is not running:

3> apply the Timing Advance Command for this TAG;

3> start the *timeAlignmentTimer* associated with this TAG;

3> when the Contention Resolution is considered not successful as described in clause 5.1.5; or

3> when the Contention Resolution is considered successful for SI request as described in clause 5.1.5, after transmitting HARQ feedback for MAC PDU including UE Contention Resolution Identity MAC CE:

4> stop *timeAlignmentTimer* associated with this TAG.

3> when the Contention Resolution is considered not successful as described in clause 5.1.5:

---

4> if CG-SDT procedure triggered as in clause 5.27 is ongoing:

5> set the $N_{TA}$ value to the value before applying the received Timing Advance Command as in TS 38.211 [8].

3> when the Contention Resolution is considered successful for Random Access procedure while the CG-SDT procedure is ongoing:

4> stop *timeAlignmentTimer* associated with this TAG;

4> start or restart the *cg-SDT-TimeAlignmentTimer* associated with this TAG.

3> when the Contention Resolution is considered successful for Random Access procedure while SRS transmission in RRC _INACTIVE is ongoing:

4> start or restart the *inactivePosSRS-TimeAlignmentTimer* associated with this TAG.

2> else:

3> ignore the received Timing Advance Command.

1> when an Absolute Timing Advance Command is received in response to a MSGA transmission including C-RNTI MAC CE as specified in clause 5.1.4a:

2> apply the Timing Advance Command for PTAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure is ongoing:

3> start or restart the *cg-SDT-TimeAlignmentTimer* associated with PTAG.

2> else:

3> start or restart the *timeAlignmentTimer* associated with PTAG.

1> when the indication is received from upper layer for stopping the *inactivePosSRS-TimeAlignmentTimer:*

2> stop the *inactivePosSRS-TimeAlignmentTimer.*

1> when the indication is received from upper layer for starting the *inactivePosSRS-TimeAlignmentTimer:*

2> start or restart the *inactivePosSRS-TimeAlignmentTimer.*

1> when instruction from the upper layer has been received for starting the *cg-SDT-TimeAlignmentTimer:*

2> start the *cg-SDT-TimeAlignmentTimer.*

1> when instruction from the upper layer has been received for stopping the *cg-SDT-TimeAlignmentTimer:*

2> consider the *cg-SDT-TimeAlignmentTimer* as expired.

1> when instruction from the upper layer has been received for starting the *TimeAlignmentTimer* associated with PTAG:

2> start the *TimeAlignmentTimer* associated with PTAG.

1> when a *timeAlignmentTimer* expires:

2> if the *timeAlignmentTimer* is associated with the PTAG:

3> flush all HARQ buffers for all Serving Cells;

3> notify RRC to release PUCCH for all Serving Cells, if configured,

3> notify RRC to release SRS for all Serving Cells, if configured;

3> clear any configured downlink assignments and configured uplink grants;

3> clear any PUSCH resource for semi-persistent CSI reporting;

3> consider all running *timeAlignmentTimers* as expired;

3> maintain $N_{TA}$ (defined in TS 38.211 [8]) of all TAGs.

2> else if the *timeAlignmentTimer* is associated with an STAG, then for all Serving Cells belonging to this TAG:

3> flush all HARQ buffers;

3> notify RRC to release PUCCH, if configured,

3> notify RRC to release SRS, if configured;

3> clear any configured downlink assignments and configured uplink grants;

3> clear any PUSCH resource for semi-persistent CSI reporting;

3> maintain $N_{TA}$ (defined in TS 38.211 [8]) of this TAG.

1> when the *inactivePosSRS-TimeAlignmentTimer* expires:

2> notify RRC to release Positioning SRS for RRC_INACTIVE configuration(s).

1> when the *cg-SDT-TimeAlignmentTimer* expires:

2> clear any configured uplink grants;

(continued)

2> if a PDCCH addressed to the MAC entity's C-RNTI after initial transmission for the CG-SDT with CCCH message has not been received:

3> consider ongoing CG-SDT procedure as terminated;

3> indicate the expiry of *cg-SDT- TimeAlignmentTimer* to the upper layer.

2> flush all HARQ buffers;

2> maintain $N_{TA}$ (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the *timeAlignmentTimer* associated with the SCell as expired.

The MAC entity shall not perform any uplink transmission on a Serving Cell except the Random Access Preamble and MSGA transmission when the *timeAlignmentTimer* associated with the TAG to which this Serving Cell belongs is not running, CG-SDT procedure is not ongoing or SRS transmission in RRC_INACTIVE as in clause 5.26 is not on-going.

Furthermore, when the *timeAlignmentTimer* associated with the PTAG is not running, CG-SDT procedure is not ongoing and SRS transmission in RRC_INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the *cg-SDT- TimeAlignmentTimer* is not running during the ongoing CG-SDT procedure as triggered in clause 5.27. The MAC entity shall not perform any uplink transmission except the Random Access Preamble and MSGA transmission when *inactivePosSRS-TimeAlignmentTimer* is not running during the procedure for SRS transmission in RRC_INACTIVE as in clause 5.26.

The contents of the foregoing (Multi-TRP and Timing Advance, etc.) may be applied in combination with the methods proposed in the present disclosure, which will be described later, or may be supplemented to clarify the technical characteristics of the methods proposed in the present disclosure. The methods described below are only classified for convenience of explanation, and some components of one method may be substituted with some components of another method or may be applied in combination with each other.

Hereinafter, i) a method for the base station to configure/indicate multiple TAs for a specific CC/BWP in uplink transmission of the terminal and ii) a method for the terminal to request/acquire multiple TAs are described, and subsequent terminal operations are proposed.

According to the 3GPP standard up to NR Rel-17, timing advance (TA) configuration for UE uplink transmission of the base station to compensate for a propagation delay between the base station and the UE can be performed via higher layer signaling. In addition, TA for specific cell(s) can be separately configured/managed through the concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of TA values to the UE or/and how a connection relationship between the plurality of TA values and UE UL channel/RS is performed. As described in Rel-18 MIMO WID objective (RP-213598) of Table 9 below, the configuration of TA values for multi-DCI (M-DCI) based M-TRP operation is considered.

[Table 9]

5. Study, and if justified, specify the following

- Two TAs for UL multi-DCI for multi-TRP operation

- Power control for UL single DCI for multi-TRP operation where unified TCI framework extension in objective 2 is assumed.

For the case of simultaneous UL transmission from multiple panels, the operation will only be limited to the objective 6 scenarios.

Here, the TA (TA value) may be based on the description of FIG. 2 and the contents described in the above timing advance (TA) related procedure.

In the RAN1 and RAN2 standards before Rel-18, a base station manages a UE TA value based on values of $N_{TA}$ and $N_{TA,offset}$ The base station may set $N_{TA}$ as follows. The base station may set $N_{TA}$ based on i) RAR MAC CE or ii) TA command MAC CE. In addition, the base station may configure the UE with up to four TAGs with respect to a specific cell or cell combination using the concept of a timing advance group (TAG). The base station may perform update/management for the $N_{TA}$ value for each TAG. In other words, the $N_{TA}$ value related to uplink timing of the UE may be determined/set based on the RAR MAC CE/TA command MAC CE for each TAG.

In Rel-18 MIMO, in order to support different TA values of the UE based on a target TRP, i) the base station may configure two TRP-specific values in a specific CC/BWP for the $N_{TA}$ (or/and $N_{TA,offset}$) value, or ii) the base station may configure a separate parameter (e.g., $N_{TA,TRP1}$ and/or $N_{TA,TRP2}$) in a specific CC/BWP via MAC CE signaling so as to configure/assign a TRP-specific TA offset value in addition to the $N_{TA}$ or/and $N_{TA,offset}$ value. In the method ii), in the calculation of the existing TA value of the UE, it may be necessary to additionally subtract/add the TA offset due to the separate parameter. In the following, two TA values managed by the methods i) or/and ii) may be expressed as TA1 (or first TA) and TA2 (or second TA). In this instance, the two TA values may correspond to two TAGs. For example, the TA1 corresponding to TRP1 may be related to TAG 1, and the TA2 corresponding to TRP2 may be related to TAG 2.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In Rel-18 MIMO, an agreement is reached regarding two TAs, as shown in Table 10 below.

[Table 10]

| Agreement |
| --- |
| For multi-DCI based multi-TRP operation with two TAs, support configuring two TAGs belonging to a serving cell. |
| **Agreement** |
| For multi-DCI multi-TRP operation with two TAs in a CC, two DL reference timings are supported where each DL reference timing is associated with one TAG |
| • baseline assumption is that the Rx timing difference between the two DL reference timings is no larger than CP length |
| • as an optional UE capability, Rx timing difference between the two DL reference timings can be assumed to be larger than CP length |
| ∘ FFS: the maximum Rx timing difference (could be up to RAN4) |
| ∘ Other than UE capability details and relevant configuration, no additional RAN1 specification enhancement specific for this case is expected |

As described above, it is discussed that two TAGs may be configured to manage two TA values in one serving cell, and it is also agreed that the reference timing to apply the TA values managed in each TAG would support two DL reference timings in one serving cell.

[Table 11]

| 7 Timing<br>7.1 UE transmit timing<br>7.1.1 Introduction |
| --- |

The UE shall have capability to follow the frame timing change of the reference cell in connected state or when transmitting PUSCH on CG resources for SDT in RRC_Inactive. The uplink frame transmission takes place ($N_{TA}$ + $N_{TA}$ offset) $\times T_c$ before the reception of the first detected path (in time) of the corresponding downlink frame from the reference cell. For serving cell(s) in pTAG, UE shall use the SpCell as the reference cell for deriving the UE transmit timing for cells in the pTAG. For serving cell(s) in sTAG, UE shall use any of the activated SCells as the reference cell for deriving the UE transmit timing for the cells in the sTAG. UE initial transmit timing accuracy and gradual timing adjustment requirements are defined in the following requirements. In the requirements of clause 7.1.2, the term reference cell on a carrier frequency subject to CCA is not available at the UE refers to when at least one SSB is configured by gNB, but the first two successive candidate SSB positions for the same SSB index within the discovery burst transmission window are not available during at least one discovery burst transmission window, at the UE due to DL CCA failures at gNB during the last 1280 ms; otherwise the reference cell on the carrier frequency subject to CCA is considered as available at the UE.

When the UL SCS is 120 kHz or smaller, the UE shall meet the Te requirement for an initial transmission provided that at least one SSB is available at the UE during the last 160 ms. When the UL SCS is 480 kHz the UE shall meet the Te requirement for an initial transmission provided that at least one SSB is available in the last 80 ms. When the UL SCS is 960 kHz the UE shall meet the Te requirement for an initial transmission provided that at least one SSB is available in the last 40 ms. The reference point for the UE initial transmit timing control requirement shall be the downlink

timing of the reference cell minus ($N_{TA}$ + $N_{TA \, offset}$) $\times T_c$. The downlink timing is defined as the time when the first path (in time) of the corresponding downlink frame used by the UE to determine downlink timing is received from the reference cell at the UE antenna. $N_{TA}$ for PRACH is defined as 0.

($N_{TA}$ + $N_{TA \, offset}$) $\times T_c$ (in $T_c$ units) for other channels is the difference between UE transmission timing and the downlink timing immediately after when the last timing advance in clause 7.3 was applied. $N_{TA}$ for other channels is not changed until next timing advance is received. The value of $N_{TA \, offset}$ depends on the duplex mode of the cell in which the uplink transmission takes place and the frequency range (FR). $N_{TA \, offset}$ is defined in Table 7.1.2-2.

Table 11 describes a reference timing at which the UE is to apply the TA value. Specifically, the UE considers a time at which the first detected path of the downlink frame is received from the reference cell as a reference timing and applies the timing advance value from the corresponding time The uplink frame transmission takes place ($N_{TA}$ + $N_{TA \, offset}$) $\times T_c$ before the reception of the first detected path (in time) of the corresponding downlink frame from the reference cell.). When the serving cell through which the UE transmits the uplink belongs to the PTAG, the UE uses the SpCell as a reference cell, and when the serving cell belongs to the STAG, the UE uses any of the activated SCells as the reference cell.

The above-described operation is for when one TAG is managed in the serving cell, and additional enhancement may be required when two TAGs are managed in the serving cell (or/and when two DL reference timings are managed) as in the Rel-18 MIMO.

Based on the background, the present disclosure describes a method for the base station to configure/indicate multiple TAs for a specific CC/BWP in uplink transmission of the UE and a method for configuring/indicating/defining multiple reference timings related to the multiple TAs, and proposes subsequent UE operations.

In the present disclosure, '/' may be interpreted as 'and', 'or', or 'and/or' according to a context.

Proposal 1

The reference cell related to two DL timings related to two TAGs may be defined/configured as follows.

The base station may configure/indicate, to the UE, the reference cell (to measure two DL reference timings for applying two TAs) in a specific serving cell or/and a group of serving cells of the UE. Or/and, the reference cell may be defined by an agreement/rule between the base station and the UE.

According to an embodiment, when the specific serving cell or/and group of serving cells belongs to the PTAG, the reference cell may be defined/configured as follows.

As an example, the reference cell can be a SpCell (i.e., PCell and/or PSCell) (with two CORESET pools configured).

As an example, when two CORESET pools are not configured for the SpCell, the reference cell may be i) an (activated) serving cell with a lowest ID among the serving cells (/BWP) with two CORESET pools set within the PTAG, or ii) a specific (activated) serving cell within the PTAG by a separate configuration of the base station.

As an example, the reference cell may be any of the activated serving cells (/BWP) in which two CORESET pools are configured within the PTAG.

As an example, in two TAGs related to two TAs (within a specific serving cell), reference cells related to respective TAGs may be different.

The reference cell of the first/primary TAG may be the SpCell.

The reference cell of the second TAG may be i) the (activated) serving cell with the lowest ID among the serving cells (/BWP) (in which two CORESET pools are configured) within the PTAG, or ii) any of the activated serving cells among the serving cells (/BWP) (in which two CORESET pools are configured) within the PTAG. The reference cell of the second TAG may be related to CORESET pool index 1.

According to an embodiment, when the specific serving cell or/and group of serving cells belongs to the STAG, the reference cell may be defined/configured as follows.

As an example, when two CORESET pools are not configured for the SpCell, the reference cell may be i) an (activated) serving cell with a lowest ID among the serving cells (/BWP) with two CORESET pools set within the STAG, or ii) a specific (activated) serving cell within the STAG by a separate configuration of the base station.

As an example, the reference cell may be any of the activated serving cells (/BWP) in which two CORESET pools are configured within the STAG.

As an example, in two TAGs related to two TAs (within a specific serving cell), reference cells related to respective TAGs may be different.

The reference cell of the first/primary TAG may be any of the activated serving cells (/BWP) within the STAG. The reference cell of the first/primary TAG may be related to CORESET pool index 0.

The reference cell of the second TAG may be any of the activated serving cells (/BWP) within the STAG. The reference cell of the second TAG may be related to CORESET pool index 1.

In the examples, when the reference cells related to the two TAGs, respectively are different, a reference point to which the TA of each TAG is applied may be a time at which a downlink signal (e.g., DL RS) is received in each reference cell (e.g., a time of the reception of the first detected path (in time) of the corresponding downlink frame).

Through the above-described operation, a UE in which two TAs are managed for a specific serving cell may recognize a reference cell (where two TRP operations are performed/where two CORESET pools are configured) for measuring two DL reference timings.

Proposal 2

The TRP/TAG-specific DL reference timing related to each TAG among the two TAGs may be defined/configured as follows.

According to an embodiment, the base station may configure/indicate, to the UE, different (downlink) slot index(es) for measuring two different DL reference timings in the reference cell of Proposal 1.

As an example, the different (downlink) slot index(es) may be slots in which different TRPs perform downlink scheduling.

As an example, the different (downlink) slot index(es) may be slots in which SSBs transmitted by different TRPs are located. The different (downlink) slot index(es) may be based on (downlink) slot index(es) within a slot configuration period given in a TDD-UL-DL-ConfigCommon parameter.

The different (downlink) slot index(es) configured/indicated by the base station may be connected to/correspond to different TAGs in a specific serving cell or/and group of serving cells. As an example, the base station may configure/indicate, to the UE, at least one first downlink slot index related to the first TAG and at least one second downlink slot index related to the second TAG.

The different (downlink) slot index(es) may be configured/indicated based on configuration information according to i) and/or ii) below.

The different (downlink) slot index(es) may be configured/indicated based on i) a configuration for each TAG (i.e., TAG-config) and/or ii) a configuration for a cell group containing one or more serving cells (i.e., CellGroupConfig, MAC-CellGroupConfig).

According to an embodiment, the TRP/TAG-specific DL reference timing may be based on DL RSs (e.g., CSI-RS(s) and/or SSB(s)) related to different TAG/CORESET pool indexes.

As an example, as described above, different TRPs may be distinguished based on TCI states related to different CORESET pool indexes, and the TRP/TAG-specific DL reference timing may be related to DL RSs based on TCI states related to different CORESET pool indexes.

The first DL RS related to the first TAG/first CORESET pool index may be a DL RS based on the first TCI state.

The second DL RS related to the second TAG/second CORESET pool index may be a DL RS based on the second TCI state.

The DL RS based on each TCI state may mean a CSI-RS or an SSB determined/indicated by the referenceSignal of the TCI state.

As an example, the base station may configure/indicate, to the UE, SSB(s)/SSB groups related to different TAG/CORESET pool indexes.

Based on the DL RSs, the UE may measure DL reference timings for different TAGs. The UE may receive the DL RSs from the reference cell(s) based on the embodiments of the present disclosure.

For reference, the TCI state may be defined/configured as follows.

The UE may be configured as a list of up to M TCI-State configurations in higher layer parameter PDSCH-Config in order to decode the PDSCH according to detected PDCCH having an intended DCI for the corresponding UE and a given serving cell. The M depends on a UE capability.

Each TCI-State includes parameters for configuring a quasi co-location relationship between one (or two) DL reference signals and DM-RS port(s) of PDSCH (or DM-RS port(s) of PDCCH or CSI-RS port(s) of CSI-RS resources).

[Table 12]

```
-- ASN1START

-- TAG-TCI-STATE-START


TCI-State ::=                        SEQUENCE {
    tci-StateId                          TCI-StateId,
    qcl-Type1                            QCL-Info,
    qcl-Type2                            QCL-Info
                        OPTIONAL,    -- Need R

    ...
}


QCL-Info ::=                         SEQUENCE {
    cell                                     ServCellIndex
                        OPTIONAL,    -- Need R
    bwp-Id                                   BWP-Id
                        OPTIONAL, -- Cond CSI-RS-Indicated
    referenceSignal                      CHOICE {
        csi-rs                               NZP-CSI-RS-ResourceId,
        ssb                                  SSB-Index
    },
    qcl-Type                             ENUMERATED {typeA, typeB, typeC, typeD},
    ...
}


-- TAG-TCI-STATE-STOP

-- ASN1STOP
```

In Table 12, the bwp-Id parameter represents a DL BWP where the RS is located, and the cell parameter represents a serving cell of the UE for which the referenceSignal parameter is configured. Only when the qcl-Type parameter is configured to typeC or typeD, the RS may be located in a serving cell other than the serving cell for which the TCI-state is configured. The referencesignal parameter may represent a reference signal for which QCL information is provided, and specifically, represent a reference antenna port(s) that is a source of a quasi co-location for the corresponding target antenna port(s) or a reference signal including the same. The target antenna port(s) may be a CSI-RS, a PDCCH DMRS, or a PDSCH DMRS. As an example, the corresponding TCI state ID may be indicated for NZP CSI-RS resource configuration information in order to indicate QCL reference RS information for NZP CSI-RS. As another example, the TCI state ID may be indicated for each CORESET configuration in order to indicate QCL reference information for a PDCCH DMRS antenna port(s). As yet another example, the TCI state ID may be indicated through the DCI in order to indicate QCL reference information for a PDSCH DMRS antenna port(s).

According to an embodiment, the reference timing related to the first/primary TAG among the two TAGs may be defined similarly to the existing legacy operation.

The reference timing related to the first/primary TAG may be defined based on the reception of the first detected path (in time) of the corresponding downlink frame in the reference cell.

The reference timing related to the second TAG may be defined within the reference cell by an additional configuration/indication of the base station. As an example, the reference timing related to the second TAG may be defined based on the (downlink) slot index(es) described above. The slot index(es) configured/indicated for the second TAG may be slots in which SSBs transmitted by the TRP related to the second TAG are located.

Based on the embodiment described above, a terminal in which two TAs are managed for a specific serving cell may recognize different (downlink) slot index(es) for measuring two DL reference timings.

In particular, the above-described embodiment (configurations/indications of slot index(ex) for two TAGs or second TAG) may be useful in a case where the UE needs to measure two reference timings related to two TAGs in one reference cell. Specifically, in the case of an M-DCI based M-TRP environment, which is a target scenario for managing two TAs, different TRPs generally utilize different slots based on a TDM scheme for DL/UL scheduling. By explicitly configuring/indicating, to the UE, which slot each TRP utilizes, it becomes possible to measure a TRP/TAG-specific DL reference timing.

According to an embodiment, the first/primary TAG (with a higher priority) among two TAGs related to a specific serving cell may be defined. The reference point of the second TAG may be determined based on the reference point of the first/primary TAG. The base station may configure/indicate, to the UE, the determination scheme of the reference point (via the RRC/MAC CE signaling).

As an example, a second reference timing related to the second TAG may be determined by a differential value from a first reference timing related to the first/primary TAG. The base station may configure/indicate the differential value to the UE.

A method for configuring/indicating the primary TAG may be based on an explicit signaling (such as the RRC/MAC CE) of the base station or based on an implicit configuration by a specific rule/definition. In the case of the implicit configuration, the primary TAG may be a TAG related to a lowest(/highest CORESET pool index within a specific serving cell (BWP).

As an example, the DL reference timing based on the DL RS defined in Proposal 2 may be defined as in Table 13 below.

[Table 13]

**Agreement** (RAN4):

For multi-DCI based multi-TRP operation with two TAs, for each TAG, the uplink transmission timing takes place before downlink timing which is associated with UL/joint TCI state. The UL/joint TCI states associated to one *coresetPoolIndex* correspond to one TAG.

∘ FFS

▪ Option 1:

DL RS in DL/Joint TCI state of PDCCH is used as reference for deriving the UL timing when both the PDCCH and the uplink are associated to the same *coresetPoolIndex* indicated UL/Joint TCI state.

▪ Option 2:

DL RS associated to the indicated UL/Joint TCI state should be tracked.

**Agreement:**

For multi-DCI based multi-TRP operation with two TAs, for each TAG, the uplink transmission timing takes place $(N_{TA} + N_{TA,offset})T_c$ before the reception of the first detected path (in time) of the corresponding downlink frame of the reference signal associated with UL/joint TCI state.

Through Proposal 1 and Proposal 2, and additional embodiments, the UE may measure each TRP/TAG-specific DL reference timing to which the two TA values are to be applied when two TAs are managed for a specific serving cell.

The UE may determine the uplink timing for each TAG based on each DL reference timing and each TA value (e.g., first/second $N_{TA,offset}$ related to the first/second TAG) (e.g., Table 1). The UE may perform the uplink transmission in the corresponding serving cell based on the uplink timing for each TAG.

The embodiments of Proposals 1/2 and additional embodiments may be operated in specific combinations. In other words, Proposals 1 and 2 may be applied independently as well as in combination with each other. For example, in Proposal 2, the DL RS for the TRP/TAG specific DL reference timing may be transmitted from the reference cell defined/configured based on Proposal 1. In other words, the UE may receive the DL RS defined/configured based on Proposal 2 (e.g., the DL RS based on the TCI state related to different CORESET pool indexes) from the reference cell defined/configured based on Proposal 1 for the TRP/TAG specific DL reference timing.

An example of the UE (or base station) operation based on at least one of the embodiments described above (e.g. at least one of Proposals 1 to 2 and the additional embodiment) is as follows.

1) The UE (base station) receives (transmits) configurations related to two TAGs (and/or two TAs) within a specific serving cell.

The configuration information may include information based on the contents of Proposals 1 to 2 and the additional embodiments. At this time, reference cells and/or reference timing related to the Two TAGs may be configured/indicated/defined based on Proposals 1 to 2 and the additional embodiments.

2) The UE (base station) receives (transmits) a message including a TA command related to the two TAGs.

3) The UE (base station) transmits (receives) an uplink channel/signal based on the message.

The above uplink transmission may be related to a specific TAG among the two TAGs.

The UE/base station operations are only examples, and each operation (or step) is not necessarily required, and operations related to the uplink transmission related to two TAGs of the UE according to the above-described embodiments may be omitted or added depending on the UE/base station implementation scheme.

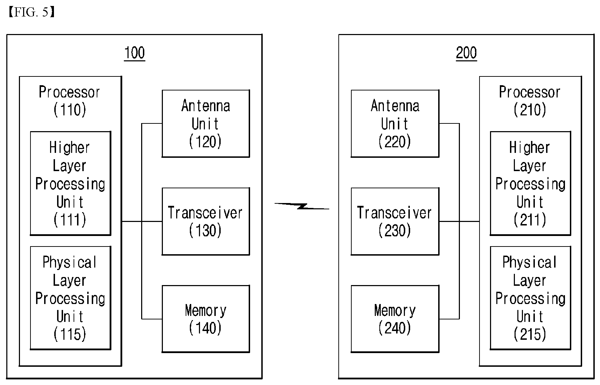

In terms of implementation, the operations (e.g., operations based on at least one of Proposals 1 and 2) of the base station/UE according to the above-described embodiments may be processed by devices (e.g., processors 110 and 210 in FIG. 5) in FIG. 5 to be described below.

Further, the operations (e.g., operations based on at least one of Proposals 1 and 2) of the base station/UE according to the above-described embodiment may be stored in memories (e.g., 140 and 240 in FIG. 5) in the form of an instruction/program (e.g., instruction or executable code) for driving at least one processor (e.g., 110 and 210 in FIG. 5).

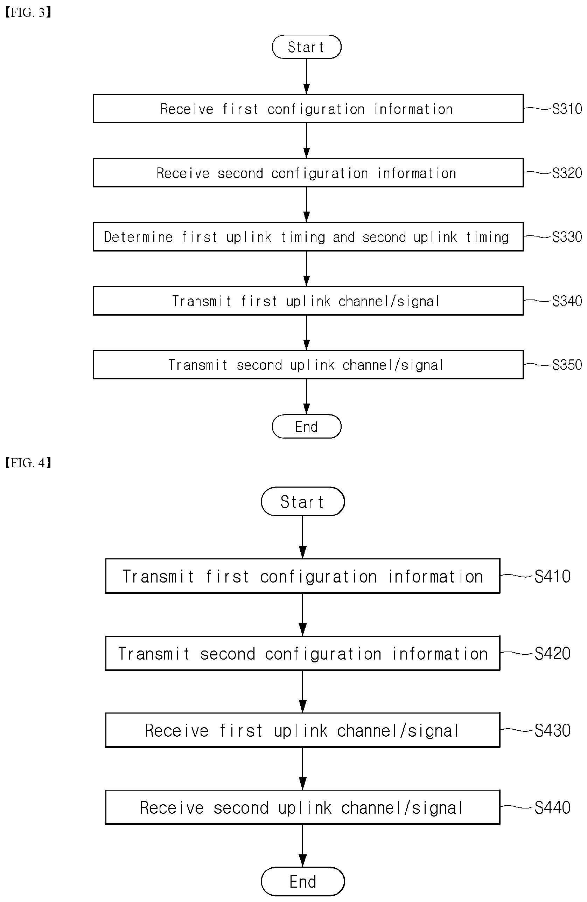

Hereinafter, the above-described embodiments will be described in detail with reference to FIGS. 3 and 4 in terms of the operations of the UE and the base station. Methods to be described below are just distinguished for convenience of description and it is needless to say that some components of any one method may be substituted with some components of another method or may be applied in combination with each other.

FIG. 3 is a flowchart for describing a method performed by the UE in the wireless communication system according to an embodiment of the present disclosure.

Referring to FIG. 3, the method performed by the UE in the wireless communication system according to one embodiment of the present disclosure includes a first configuration information receiving step (S310), a second configuration information receiving step (S320), a first uplink timing and second uplink timing determining step (S330), a first uplink channel/signal transmitting step (S340), and a second uplink channel/signal transmitting step (S350).

In S310, the UE receives first configuration information from the base station. i) First control resource sets (CORESETs) related to a first control resource set (CORESET) pool index and ii) second CORESETs related to a second CORESET pool index are configured based on the first configuration information. As an example, the first configuration information may be based on a PDCCH-config containing a list of CORESETs (controlResourceSetToAddModList).

In S320, the UE receives second configuration information from the base station. First $N_{TA,offset}$ and second $N_{TA,offset}$ related to a serving cell are configured based on the second configuration information. The second configuration information may be ServingCellConfigCommon including parameters (e.g., n-TimingAdvanceOffset and n-TimingAdvanceOffset2) for the first $N_{TA,offset}$ and the second $N_{TA,offset}$ (see Table 2).

The first $N_{TA,offset}$ and the second $N_{TA,offset}$ may be related to a first timing advance group (TAG) and a second timing advance group (TAG).

In S330, the UE determines a first uplink timing and a second uplink timing based on the first $N_{TA,offset}$ and the second $N_{TA,offset}$ Each uplink timing may be determined based on Table 1. As an example, each uplink timing may be related to an uplink frame.

According to an embodiment, the first uplink timing may be determined based on the first $N_{TA,offset}$ and a first downlink timing. The second uplink timing may be determined based on the second $N_{TA,offset}$ and a second downlink timing.

$N_{TA,offset}$ means $N_{TA,offset}$ that is configured to be TRP-specific in order to support different TA values of the UE according to the target TRP as described above.

As a specific example, the first $N_{TA,offset}$ may be applied to uplink transmission based on a first transmission configuration indication (TCI) state related to the first CORESET pool index. The second $N_{TA,offset}$ may be applied to uplink transmission based on a second TCI state related to the second CORESET pool index. The first TAG may have an association with the first TCI state. The second TAG may have an association with the second TCI state.

Each downlink timing may be based on Proposal 1 and/or Proposal 2. Hereinafter, this will be specifically described.

According to an embodiment, the first downlink timing may be based on a reception time based on a first downlink reference signal (DL RS) related to the first TCI state. The second downlink timing may be based on a reception time based on a second downlink reference signal (DL RS) related to the second TCI state.

The reception time based on each DL RS may be based on a time when a first path of a downlink frame related to each DL RS is received by the UE.

The time when the first path of the downlink frame is received by the UE is based on a start of the downlink frame.

The first DL RS and the second DL RS may be related to at least one reference cell. The embodiment may be based on Proposal 1. As an example, the first DL RS and the second DL RS may be received from one reference cell. As an example, the first DL RS and the second DL RS may be received from reference cells each other.

As an example, based on the first TAG and the second TAG being a first primary TAG (PTAG) and a second PTAG: the at least one reference cell may include i) a special cell (SpCell) and/or ii) a serving cell with a lowest ID among serving cells in which the first CORESETs and the second CORESETs are configured.

As an example, based on the first TAG and the second TAG being the first secondary TAG (STAG) and the second STAG: the at least one reference cell may include i) one of activated secondary cells (SCells) and/or ii) a serving cell with a lowest ID among the serving cells in which the first CORESETs and the second CORESETs are configured.

The first DL RS and the second DL RS may be received based on different slot indexes. The embodiment may be based on Proposal 2.

In S340, the UE transmits, to the base station, a first uplink channel/signal based on the first uplink timing.

As an example, the first uplink channel/signal may be transmitted based on the first TCI state. Specifically, a first spatial domain filter or a first spatial domain transmission filter for transmission of the first uplink channel/signal may be determined based on the first TCI state. As an example, the first uplink channel/signal may be transmitted for TRP1 among two transmission reception points (TRPs).

In S350, the UE transmits, to the base station, a second uplink channel/signal based on the second uplink timing.

As an example, the second uplink channel/signal may be transmitted based on the second TCI state. Specifically, a second spatial domain filter or a second spatial domain transmission filter for transmission of the second uplink channel/signal may be determined based on the second TCI state. As an example, the second uplink channel/signal may be transmitted for TRP2 among the two transmission reception points (TRPs).

According to an embodiment, each uplink channel/signal may be a physical uplink shared channel (PUSCH), a sounding reference signal (SRS), or a physical uplink control channel (PUCCH).

According to an embodiment, each uplink timing (e.g., the first uplink timing or the second uplink timing) may take place a time unit (e.g., a first time unit or a second time unit) before each downlink timing (e.g., the first downlink timing or the second downlink timing).

The time unit may be determined based on i) $N_{TA}$ related to an amount of time alignment for each TAG (e.g., the first TAG or the second TAG), ii) each $N_{TA,offset}$ (e.g., first $N_{TA,offset}$ or second $N_{TA,offset}$), and iii) a basic time unit $T_c$. For example, the time unit may be expressed as $N_{TA} + N_{TA,offset}$.

The method may further include an MAC CE transmitting step. In the step, the UE receives a medium access control control element (MAC CE) from the base station. The MAC CE may include a timing advance command. The timing advance command may indicate an index value $T_A$. This step may be performed before S330.

The timing advance command may be applied to one TAG. As an example, a TAG (e.g., a first TAG or a second TAG) to which the timing advance command is to be applied among two TAGs may be determined/indicated based on a field (e.g., TAG ID or TI) included in the MAC CE. The MAC CE may be a timing advance command MAC CE or an absolute timing advance command MAC CE.

As an example, the field (e.g., TAG ID or TI) included in the MAC CE may be defined as in Table 14 below.

[Table 14]

| TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead; |
| --- |

Unlike the example described above, the timing advance command may also be received in a random access response (RAR), and included. For example, the MAC CE receiving step may be replaced with the RAR receiving step, or the RAR receiving step may be further added to the MAC CE receiving step in the method.

In the RAR, the TAG to which the timing advance command is to be applied among the two TAGs may be determined based on a field (e.g., TI) included in the RAR (e.g., MAC RAR).

As an example, the field (e.g., TI) included in the MAC RAR may be defined as in Table 15 below.

[Table 15]

| |
|---|
| TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead; |

For example, based on the timing advance command being related to the first TAG or the second TAG: $N_{TA}$ related to an amount of time alignment for the first TAG or the second TAG is may be determined based on the index value $T_A$. Here, the determination of $N_{TA}$ may include i) an indication for a value of $N_{TA}$ or ii) an adjustment of the value of an existing $N_{TA}$.

As an example, $N_{TA}$ may be indicated based on the index value $T_A$ (e.g., 0, 1, 2, ..., 3846). As a specific example, the $N_{TA}$ may be expressed as $T_A \cdot 16 \cdot 64/2^{\mu}$.

As an example, the index value $T_A$ (e.g., 1, 2,..., 63) may indicate an adjustment of current $N_{TA}$ (e.g., $N_{TA\_old}$). Based on the index value $T_A$ and the current $N_{TA}$ (e.g., $N_{TA\_old}$), new $N_{TA}$ (e.g., $N_{TA\_new}$) may be determined. As a specific example, the $N_{TA}$ (e.g., $N_{TA\_new}$) may be determined as $N_{TA\,old} + (T_A - 31) \cdot 16 \cdot 64/2^{\mu}$ (see Table 5). The method may further include a TAG related configuration information receiving step. In the step, the UE receives the TAG related configuration information from the base station. The TAG related configuration information (e.g., TAG-Config in Table 7) may include information for the first TAG and the second TAG. This step may be performed before S330.

The operations based on S310 to S350, the MAC CE receiving, and the TAG related configuration information receiving step described above may be implemented by the apparatus in FIG. 5. For example, a UE 200 may control one or more transceivers 230 and/or one or more memories 240 to perform the operations based on S310 to S350, the MAC CE receiving, and the TAG related configuration information receiving step.

Hereinafter, the embodiments described above will be specifically described in terms of the operation of the base station.

S410 to S440, an MAC CE transmitting step, and a TAG related configuration information transmitting step described below correspond to S310 to S350, the MAC CE receiving step, and the TAG related configuration information receiving step described in FIG. 3. By considering the correspondence relationship, redundant descriptions are omitted. That is, a specific description of the base station operation described below may be replaced with the description/embodiment of FIG. 3 corresponding to the corresponding operation.

As an example, the description/embodiment of S310 to S350 in FIG. 3 may be additionally applied to the base station operations of S410 to S440 described below.

As an example, the description/embodiment of the MAC CE transmitting step and the TAG related configuration information receiving step may be additionally applied to the base station operations in the MAC CE transmitting step and the TAG related configuration information transmitting step described below.

FIG. 4 is a flowchart for describing a method performed by the base station the wireless communication system according to another embodiment of the present disclosure.

Referring to FIG. 4, the method performed by the base station in the wireless communication system according to another embodiment of the present disclosure includes a first configuration information transmitting step (S410), a second configuration information transmitting step (S420), a first uplink channel/signal receiving step (S430), and a second uplink channel/signal receiving step (S440).

In S410, the base station transmits first configuration information to the UE.

In S420, the base station transmits second configuration information to the UE.

In S430, the base station receives, from the UE, a first uplink channel/signal based on a first uplink timing. Specifically, the base station receives the first uplink channel/signal transmitted based on the first uplink timing determined by the UE.

In S440, the base station receives, from the UE, a second uplink channel/signal based on a second uplink timing. Specifically, the base station receives the second uplink channel/signal transmitted based on the second uplink timing determined by the UE.

The method may further include an MAC CE transmitting step. In the step, the base station transmits a medium access control control element (MAC CE) from the UE.

The method may further include a TAG related configuration information transmitting step. In the step, the base station transmits the TAG related configuration information to the UE. This step may be performed before S430.

The operations based on S410 to S440 and the TAG related configuration information transmitting step described above may be implemented by the apparatus in FIG. 5. For example, a base station 100 may control one or more transceivers 130 and/or one or more memories 140 to perform the operations based on steps S410 to S440 and the TAG related configuration information transmitting step.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) in a wireless communication system, the method comprising:

   receiving first configuration information,
   wherein i) first control resource sets (CORESETs) related to a first control resource set (CORESET) pool index and ii) second CORESETs related to a second CORESET pool index are configured based on the first configuration information;
   receiving second configuration information,
   wherein first $N_{TA,offset}$ and second $N_{TA,offset}$ related to a serving cell are configured based on the second configuration information, and
   wherein the first $N_{TA,offset}$ and second $N_{TA,offset}$ are related to a first timing advance group (TAG) and a second timing advance group (TAG);
   determining a first uplink timing and a second uplink timing based on the first $N_{TA,offset}$ and the second $N_{TA,offset}$;
   transmitting a first uplink channel/signal based on the first uplink timing; and
   transmitting a second uplink channel/signal based on the second uplink timing,
   wherein the first uplink timing is determined based on the first $N_{TA,offset}$ and a first downlink timing, and
   wherein the second uplink timing is determined based on the second $N_{TA,offset}$ and a second downlink timing.

2. The method of claim 1, wherein the first $N_{TA,offset}$ is applied to uplink transmission based on a first transmission configuration indication (TCI) state related to the first CORESET pool index, and
   wherein the second $N_{TA,offset}$ is applied to uplink transmission based on a second TCI state related to the second CORESET pool index.

3. The method of claim 2, wherein the first TAG has an association with the first TCI state, and
   wherein the second TAG has an association with the second TCI state.

4. The method of claim 3, wherein the first downlink timing is based on a reception time based on a first downlink reference signal (DL RS) related to the first TCI state, and
   wherein the second downlink timing is based on a reception time based on a second downlink reference signal (DL RS) related to the second TCI state.

5. The method of claim 4, wherein the reception time based on each DL RS is based on a time when a first path of a downlink frame related to each DL RS is received by the UE.

6. The method of claim 5, wherein the time when the first path of the downlink frame is received by the UE is based on a start of the downlink frame.

7. The method of claim 4, wherein the first DL RS and the second DL RS are related to at least one reference cell.

8. The method of claim 7, wherein based on the first TAG and the second TAG being a first primary TAG (PTAG) and a second PTAG: the at least one reference cell includes i) a special cell (SpCell) and/or ii) a serving cell with a lowest ID among serving cells in which the first CORESETs and the second CORESETs are configured.

9. The method of claim 7, wherein based on the first TAG and the second TAG being a first secondary TAG (STAG) and a second STAG: the at least one reference cell includes i) one of activated secondary cells (SCells) and/or ii) a serving cell with a lowest ID among the serving cells in which the first CORESETs and the second CORESETs are configured.

10. The method of claim 4, wherein the first DL RS and the second DL RS are received based on different slot indices.

11. The method of claim 1, wherein each uplink timing is related to an uplink frame.

12. The method of claim 1, wherein each uplink channel/signal is a physical uplink shared channel (PUSCH), a sounding reference signal (SRS), or a physical uplink control channel (PUCCH).

13. The method of claim 1, wherein each uplink timing takes place a time unit before each downlink timing, and wherein the time unit is determined based on i) $N_{TA}$ related to an amount of time alignment for each TAG, ii) each $N_{TA,offset}$, and iii) a basic time unit $T_c$.

14. The method of claim 1, further comprising:

    receiving a medium access control control element (MAC CE),
    wherein the MAC CE includes a timing advance command, and
    wherein the timing advance command indicates an index value $T_A$.

15. The method of claim 14, wherein based on the timing advance command being related to the first TAG or the second TAG:
    $N_{TA}$ related to an amount of time alignment for the first TAG or the second TAG is determined based on the index value $T_A$.

16. A user equipment (UE) operating in a wireless communication system, the UE comprising:

    one or more transceivers;
    one or more processors; and
    one or more memories connected to the one or more processors and storing instructions,
    wherein based on the instructions being executed by the one or more processors, the one or more processors are configured to perform all steps of a method of any one of claims 1 to 15.

17. A device comprising:

    one or more memories and one or more processors functionally connected to the one or more memories,
    wherein based on the one or more memories being executed by the one or more processors, the one or more processors store instructions configured to perform all steps of a method of any one of claims 1 to 15.

18. One or more non-transitory computer-readable media storing instructions,
    wherein the instructions executable by one or more processors configure the one or more processor to perform all steps of a method of any one of claims 1 to 15.

19. A method performed by a base station in a wireless communication system, the method comprising:

    transmitting first configuration information,

        i) first control resource sets (CORESETs) related to a first control resource set (CORESET) pool index and ii) second CORESETs related to a second CORESET pool index are configured based on the first configuration information;

    transmitting second configuration information,
    wherein first $N_{TA,offset}$ and second $N_{TA,offset}$ related to a serving cell are configured based on the second configuration information, and
    wherein the first $N_{TA,offset}$ and second $N_{TA,offset}$ are related to a first timing advance group (TAG) and a second timing advance group (TAG);
    receiving a first uplink channel/signal based on a first uplink timing; and
    receiving a second uplink channel/signal based on a second uplink timing,
    wherein the first uplink timing is determined based on the first $N_{TA,offset}$ and a first downlink timing, and
    wherein the second uplink timing is determined based on the second $N_{TA,offset}$ and a second downlink timing.

20. A base station operating in a wireless communication system, the base station comprising:

    one or more transceivers,
    one or more processors; and
    one or more memories connected to the one or more processors and storing instructions,
    wherein based on the instructions being executed by the one or more processors, the one or more processors are configured to perform all steps of a method of claim 19.

【FIG. 1】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 2】

| | | |
|---|---|---|
| TAG ID | Timing Advance Command | Oct 1 |

【FIG. 3】

```
                    ┌─────────┐
                    │  Start  │
                    └─────────┘
                         │
                         ▼
    ┌──────────────────────────────────────────┐
    │   Receive first configuration information │─── S310
    └──────────────────────────────────────────┘
                         │
                         ▼
    ┌──────────────────────────────────────────┐
    │  Receive second configuration information │─── S320
    └──────────────────────────────────────────┘
                         │
                         ▼
    ┌──────────────────────────────────────────┐
    │ Determine first uplink timing and second uplink timing │─── S330
    └──────────────────────────────────────────┘
                         │
                         ▼
    ┌──────────────────────────────────────────┐
    │      Transmit first uplink channel/signal │─── S340
    └──────────────────────────────────────────┘
                         │
                         ▼
    ┌──────────────────────────────────────────┐
    │     Transmit second uplink channel/signal │─── S350
    └──────────────────────────────────────────┘
                         │
                         ▼
                    ┌─────────┐
                    │   End   │
                    └─────────┘
```

【FIG. 4】

```
                    ┌─────────┐
                    │  Start  │
                    └─────────┘
                         │
                         ▼
    ┌──────────────────────────────────────────┐
    │   Transmit first configuration information │─── S410
    └──────────────────────────────────────────┘
                         │
                         ▼
    ┌──────────────────────────────────────────┐
    │  Transmit second configuration information │─── S420
    └──────────────────────────────────────────┘
                         │
                         ▼
    ┌──────────────────────────────────────────┐
    │      Receive first uplink channel/signal  │─── S430
    └──────────────────────────────────────────┘
                         │
                         ▼
    ┌──────────────────────────────────────────┐
    │     Receive second uplink channel/signal  │─── S440
    └──────────────────────────────────────────┘
                         │
                         ▼
                    ┌─────────┐
                    │   End   │
                    └─────────┘
```

【FIG. 5】

## INTERNATIONAL SEARCH REPORT

International application No.

**PCT/KR2023/017659**

### A. CLASSIFICATION OF SUBJECT MATTER

**H04W 56/00**(2009.01)i; **H04W 72/23**(2023.01)i

According to International Patent Classification (IPC) or to both national classification and IPC

### B. FIELDS SEARCHED

Minimum documentation searched (classification system followed by classification symbols)

H04W 56/00(2009.01); H04B 7/02(2006.01); H04W 36/00(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CORESET pool index, CORESET, TAG, 상향링크 타이밍(uplink timing), 하향링크 타이밍(downlink timing)

### C. DOCUMENTS CONSIDERED TO BE RELEVANT

| Category* | Citation of document, with indication, where appropriate, of the relevant passages | Relevant to claim No. |
|---|---|---|
| A | WO 2020-215108 A2 (FUTUREWEI TECHNOLOGIES, INC.) 22 October 2020 (2020-10-22)<br>See pages 44-46; claims 4 and 7; and figures 17-19. | 1-20 |
| A | KR 10-2018-0136975 A (SAMSUNG ELECTRONICS CO., LTD.) 26 December 2018 (2018-12-26)<br>See paragraphs [0049]-[0073]; claims 1 and 3; and figure 4. | 1-20 |
| A | WO 2022-082455 A1 (APPLE INC.) 28 April 2022 (2022-04-28)<br>See paragraphs [0106]-[0111]; and figure 17. | 1-20 |
| A | WO 2022-016382 A1 (QUALCOMM INCORPORATED) 27 January 2022 (2022-01-27)<br>See paragraphs [0091]-[0096]; and figures 12-13. | 1-20 |
| A | WO 2022-130207 A1 (TELEFONAKTIEBOLAGET LM ERICSSON (PUBL)) 23 June 2022 (2022-06-23)<br>See claims 1-25. | 1-20 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 February 2024** | **21 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017659**

| Patent document cited in search report | | | Publication date (day/month/year) | Patent family member(s) | | | Publication date (day/month/year) |
|---|---|---|---|---|---|---|---|
| WO | 2020-215108 | A2 | 22 October 2020 | CN | 116235568 | A | 06 June 2023 |
| | | | | EP | 4190044 | A2 | 07 June 2023 |
| | | | | US | 2023-0188283 | A1 | 15 June 2023 |
| | | | | WO | 2020-215108 | A3 | 08 July 2021 |
| KR | 10-2018-0136975 | A | 26 December 2018 | CN | 107371271 | A | 21 November 2017 |
| | | | | CN | 107371271 | B | 24 May 2022 |
| | | | | CN | 115250538 | A | 28 October 2022 |
| | | | | EP | 3443799 | A1 | 20 February 2019 |
| | | | | EP | 3443799 | B1 | 19 January 2022 |
| | | | | EP | 3989668 | A1 | 27 April 2022 |
| | | | | KR | 10-2021-0119565 | A | 05 October 2021 |
| | | | | KR | 10-2414358 | B1 | 29 June 2022 |
| | | | | US | 11089583 | B2 | 10 August 2021 |
| | | | | US | 11647521 | B2 | 09 May 2023 |
| | | | | US | 2020-0267694 | A1 | 20 August 2020 |
| | | | | US | 2021-0368485 | A1 | 25 November 2021 |
| | | | | WO | 2017-196041 | A1 | 16 November 2017 |
| WO | 2022-082455 | A1 | 28 April 2022 | CN | 116349143 | A | 27 June 2023 |
| | | | | US | 2022-0304036 | A1 | 22 September 2022 |
| WO | 2022-016382 | A1 | 27 January 2022 | CN | 116210311 | A | 02 June 2023 |
| | | | | EP | 4186294 | A1 | 31 May 2023 |
| | | | | US | 2023-0217459 | A1 | 06 July 2023 |
| WO | 2022-130207 | A1 | 23 June 2022 | EP | 4260617 | A1 | 18 October 2023 |

Form PCT/ISA/210 (patent family annex) (July 2022)